# EUROPEAN PATENT SPECIFICATION

(11) **EP 3 772 569 B1**
(45) Date of publication and mention of the grant of the patent: **18.09.2024**
(21) Application number: 19191074.4
(22) Date of filing: 09.08.2019
(51) Int. Cl.: F01D 11/00, F02B 37/18

(54) **ACTUATOR ASSEMBLY WITH SEALING ARRANGEMENT**
AKTUATORANORDNUNG MIT DICHTUNGSANORDNUNG
ENSEMBLE ACTIONNEUR DOTÉ D'UN AGENCEMENT D'ÉTANCHÉITÉ

(43) Date of publication of application: 10.02.2021
(73) Proprietor: Borgwarner Inc., Auburn Hills, Michigan 48326 (US)
(72) Inventor: PATIL, Ravi, 65451 Kelsterbach (DE)
(74) Representative: Peterreins Schley

(56) References cited:
- EP-A1- 2 253 816
- DE-A1- 102011 086 089
- DE-A1- 102013 011 106
- DE-A1- 3 916 221
- DE-U1- 202017 103 441
- JP-A- 2008 106 823
- JP-A- S62 110 079
- US-A1- 2014 003 908
- US-A1- 2014 348 643
- US-A1- 2018 313 220
- US-B1- 6 210 106

## Description

### Technical Field

This disclosure relates to an actuator assembly for a charging apparatus. Furthermore, the invention relates to a turbine and a charging apparatus having such an actuator assembly. Additionally, the invention concerns a method for mounting such an actuator assembly into a turbine housing.

### Background

The individual mobility sector is experiencing a disruptive change. Especially, the increasing number of electric vehicles entering the market demands higher efficiencies from traditional internal combustion engine (ICE) vehicles. Therefore, more and more vehicles are equipped with efficiency increasing measures, such as charging apparatuses and emission reduction devices. Well known are, for instance, charging apparatuses wherein a compressor may be driven by an e-motor (e-charger) and/or an exhaust gas powered turbine (turbocharger). Generally, an exhaust gas turbocharger has a turbine with a turbine wheel, which is driven by the exhaust gas flow of the combustion engine. A compressor with a compressor wheel arranged on a common shaft with the turbine wheel compresses the fresh air drawn in for the engine. This increases the amount of air or oxygen available to the engine for combustion. This in turn increases the performance of the combustion engine.

Upon reaching a certain charging pressure a part of the exhaust gas can be bypassed around the turbine wheel in order to prevent the turbine wheel exceeding its maximum rotational speed. The amount of exhaust gas which is bypassed is commonly controlled by a bypass valve or wastegate valve which opens and closes a bypass opening connecting a bypass channel with a turbine inlet channel, in particular a volute. The wastegate valve is usually actuated by an actuator assembly which connects the wastegate valve inside the turbine housing with an actuating lever outside the turbine housing.

In the state of the art, various actuator assemblies for bypass valves (wastegate valves) which comprise an actuator shaft being rotatably supported in a bushing are known. In this regard, DE 10 2011 086089 A1 discloses a wastegate valve assembly with a shaft being supported in a first bushing and having a seal ring between the first bushing and a second bushing. One of the main challenges of these actuator assemblies is to reduce exhaust gas leakage from inside the turbine housing to the outside.

Accordingly, the objective of the present invention is to provide an actuator assembly with reduced leakage.

### Summary

The present invention relates to an actuator assembly for a charging apparatus according to claim 1. Furthermore, the invention relates to a turbine and a charging apparatus having such an actuator assembly according to claims 11 and 13, respectively.

The inventive actuator assembly for a charging apparatus comprises an actuator shaft, a bushing and a sealing arrangement.The actuator shaft is arranged inside the bushing and comprises a shaft step and a reduced diameter portion. The sealing arrangement comprises an insert sleeve and a seal ring. The the insert sleeve is arranged on the reduced diameter portion and has a sleeve step between a larger diameter sleeve portion and a smaller diameter sleeve portion. The seal ring is arranged in a cavity formed radially between the bushing and the smaller diameter sleeve portion and axially between the sleeve step and the shaft step. A radial sealing region and an axial sealing region are defined by the sealing arrangement. The radial sealing region is formed between the bushing and the seal ring, and the axial sealing region is formed between the seal ring and the insert sleeve. The seal ring is thereby configured and arranged to be driven into contact with the insert sleeve by exhaust gas pressure. These features advantageously lead to a self-actuated sealing which is enabled by exhaust gas pushing the seal ring in an axial direction against the insert sleeve. On the other hand, there is no or at least a reduced friction wear radially outward (and also radially inward) of the seal ring as the seal ring is slidable or drivable on the bushing in order to come into contact with the insert sleeve. That means also that there is no preload acting on the actuator shaft or the bushing and consequently there is not only less wear on the seal ring but also on the actuator shaft and the bushing. As the seal ring can slide in an axial direction inside the bushing bore, i.e. radially inside the bushing, the actuator shaft (and an outer lever connected thereto) are not restricted in axial and/or rotational movement by seal ring. Thereby thermally or mechanically conditioned displacements or geometry changes of the actuator assembly or parts of it may be possible or compensable without resulting in damages. Furthermore, by having the self-actuated sealing arrangement, there is no need for piston - or o-rings which are clamped at a fixed spot and have a gap in a circumferential direction and, thus mostly result in a leakage at the gap and friction wear due to the clamping. The inventive seal ring, however, leads to close to zero leakage and reduced wear.

In another aspect of the actuator assembly, the sealing arrangement may further comprise an exhaust gas pressure chamber. Additionally, the exhaust gas pressure chamber may be configured to build up exhaust gas pressure to move the seal ring into axial sealing contact with the insert sleeve in order to establish the axial sealing region. Alternatively or additionally, the exhaust gas pressure chamber may be formed radially between the bushing and the insert sleeve and axially between the actuator shaft and the seal ring. By providing an exhaust gas pressure chamber exhaust gas can accumulate inside the chamber in order to provide pressure force which enacts on the seal ring to urge it against the insert sleeve.

In another aspect, which is combinable with any one of the previous aspects, the radial sealing region may be configured as slide fit. That means, the seal ring may slide closely inside the bushing. In particular, the seal ring can slide on an inner surface of the bushing. Thereby, less force is exerted on the seal ring but also on the bushing. This leads to a negligible wear or at least less wear in comparison to, for instance, a piston ring. The slide fit further ensures an axial movability of the seal ring to compensate for an axial displacement of the actuator shaft and/or the insert sleeve (and/or an outer lever which may be connected to the actuator shaft).

In another aspect, which is combinable with any one of the previous aspects, the radial sealing region may be formed between an outer diameter of the seal ring and an inner diameter of the bushing. In other words, the radial sealing region may be formed between a bushing bore of the bushing (i.e. a radially inner surface of the bushing) and a radially outer surface of the seal ring.

In another aspect, which is combinable with any one of the previous aspects, the axial sealing region may be formed between a first axial end face of the seal ring and a sleeve step face of the insert sleeve. The first axial end face may be formed as an annular face, in particular as an annular face without interruptions. Alternatively or additionally, the sleeve step face may be formed as an annular face, in particular as an annular face without interruptions. Alternatively or additionally, the first axial end face may be formed conical or curved to establish a line contact in the axial sealing region. Alternatively or additionally, the sleeve step face may be formed conical or curved to establish a line contact in the axial sealing region. This feature leads advantageously to the effect, that the sealing arrangement can compensate for tilting of the actuator assembly, in particular tilting of the actuator shaft.

In another aspect, which is combinable with any one of the previous aspects, the insert sleeve may comprise a first sleeve portion with a first outer diameter and a second sleeve portion with a second outer diameter. Additionally, the second outer diameter may be larger than the first outer diameter such that a sleeve step is formed. In particular, the sleeve step may have a sleeve step face. Additionally, the sleeve step may be formed between the first sleeve portion and the second sleeve portion. That means the first sleeve portion and the second sleeve portion may be axially adjacent. Therefore, the first sleeve portion may also be referred to as first axial sleeve portion and the second sleeve portion may also be referred to as second axial sleeve portion. The second sleeve portion may be arranged further to the outside of the actuator assembly, in particular further to the outside of a turbine housing when the actuator assembly is mounted in a turbine. Additionally, an inner diameter of the seal ring may be smaller than the second outer diameter of the second sleeve portion. This latter feature ensures that the seal ring and the insert sleeve are overlapping in a radial direction. Thereby the axial sealing region can be established. Furthermore, the seal ring can be axially secured or restricted by the insert sleeve when exhaust gas pressure urges the seal ring in an axial direction towards the second sleeve portion.

Additionally to the previous aspect, the seal ring may be arranged between, in particular radially between the first sleeve portion and the bushing and between, in particular axially between the second sleeve portion and the actuator shaft. In other words, the seal ring may be arranged in a cavity formed by the bushing, the insert sleeve and the actuator shaft. More specific the cavity may be formed axially between a shaft step face of the actuator shaft and the sleeve step face, and radially between and a radially outer surface of the first sleeve portion of the insert sleeve and a radially inner surface of the bushing.

Alternatively or additionally to the previous aspect and when the sealing arrangement further comprises an exhaust gas pressure chamber, the exhaust gas pressure chamber may be formed between, in particular radially between the first sleeve portion and the bushing and between, in particular axially between the second sleeve portion and the actuator shaft. That means both the exhaust gas pressure chamber and the seal ring are located inside the cavity. In other words, the exhaust gas pressure chamber may equal the space of the cavity minus the space occupied by the seal ring.

In another aspect, which is combinable with any one of the previous aspects, the actuator shaft may comprise a reduced diameter portion at an axial outer end region of the actuator shaft such that a shaft step with a shaft step face is formed. Additionally, the sealing arrangement may be located radially outwardly of the reduced diameter portion. That means the sealing arrangement may be located radially between the bushing and the reduced diameter portion. In other words, the sealing arrangement is located at the axial outer end region. Alternatively or additionally, the seal ring and the insert sleeve may be accommodated between the bushing, the shaft step and the reduced diameter portion. Alternatively or additionally, the insert sleeve may be arranged on the reduced diameter portion such that a sleeve step face of the insert sleeve opposes the shaft step face. Additionally, the seal ring may be arranged between, in particular radially between, the sleeve step face and the shaft step face. Alternatively or additionally, an inner diameter of the insert sleeve may be larger than an outer diameter of the reduced diameter portion such that a radial clearance fit is established between the actuator shaft and the insert sleeve. Alternatively or additionally, the actuator shaft may comprise an undercut which extends circumferentially between the reduced diameter portion and the shaft step. This latter feature ensures an axial abutment of the insert sleeve and the shaft step face.

In another aspect, which is combinable with any one of the previous aspects, the actuator shaft may comprise a first shaft bearing land and a second shaft bearing land. The second shaft bearing land may be axially spaced apart from the first shaft bearing land such that an exhaust gas passage is formed therebetween. By providing the shaft bearing lands friction wear between the actuator shaft and the bushing can be reduced. Furthermore, the stability of the actuator shaft can be improved. By providing the exhaust gas passage exhaust gas flow towards the exhaust gas pressure chamber along the actuator shaft can be facilitated. The first shaft bearing land may be arranged at a first axial end region of the bushing. The second shaft bearing land may be arranged adjacent a second axial end region of the bushing. Additionally, the second shaft bearing land may be arranged directly adjacent the shaft step. Additionally, the second shaft bearing land may form an outer diameter of the shaft step.

In another aspect, which is combinable with the previous aspect, an outer diameter of the first shaft bearing land may be smaller than an inner diameter of the bushing such that exhaust gas can flow axially through a gap formed radially between the first shaft bearing land and the bushing. Alternatively or additionally, an outer diameter of the second shaft bearing land may be smaller than an inner diameter of the bushing such that exhaust gas can flow axially through a gap formed radially between the second shaft bearing land and the bushing. Alternatively or additionally, an outer diameter of the first shaft bearing land may be smaller than outer diameter of the seal ring. Alternatively or additionally, an outer diameter of the second shaft bearing land may be smaller than outer diameter of the seal ring. In other words, an outer diameter of the seal ring may be larger than an outer diameter of the first shaft bearing land and smaller than an inner diameter of the bushing. Alternatively or additionally, an outer diameter of the seal ring may be larger than an outer diameter of the second shaft bearing land and smaller than an inner diameter of the bushing.

In another aspect, which is combinable with any one of the previous aspects, the seal ring may be arranged axially between a shaft step of the actuator shaft and a sleeve step of the insert sleeve.

In another aspect, which is combinable with any one of the previous aspects, the actuator assembly may further comprise an outer lever. The outer lever may be attached to an axial outer end region of the actuator shaft such that the insert sleeve is axially press-fit between a shaft step of the actuator shaft and the outer lever.

In another aspect, which is combinable with any one of the previous aspects, the seal ring may be configured as a closed ring. Alternatively or additionally, the seal ring may be configured as a solid ring. In other words, the seal ring may be configured as a solid ring. Alternatively or additionally, the seal ring may be made from metallic material. In other words, the seal ring is shaped to have no interruption in circumferential direction.

The present invention further relates to a turbine for a charging apparatus. The turbine comprises a turbine housing, a turbine wheel rotatably arranged in the turbine housing and a bypass valve. The turbine housing defines a volute and a bypass channel which is fluidically coupled to the volute via a bypass opening. The bypass valve is configured to open and close the bypass opening. The turbine further comprises an actuator assembly according to any one of the previous aspects. Thereby, the actuator assembly is coupled to the bypass valve.

In another aspect of the turbine, the actuator assembly may extend through a bore in the turbine housing from outside the turbine housing into the bypass channel. The sealing arrangement may be located at an outer end region of the bore which is opposite to the bypass channel. In other words, the actuator assembly may be arranged inside the bore of the turbine housing.

In another aspect of the turbine, which is combinable with any one of the previous aspects, the actuator shaft may extend into the bypass channel and may be configured such that exhaust gas residing in the bypass channel can stream from an axial inner end region of the actuator shaft along the actuator shaft to an exhaust gas pressure chamber of the sealing arrangement. Alternatively or additionally, the bushing may extend into the bypass channel and may be configured such that exhaust gas residing in the the bypass channel can stream from an axial inner end region of the actuator shaft along the actuator shaft to an exhaust gas pressure chamber of the sealing arrangement.

The present invention further relates to a charging apparatus. The charging apparatus comprises a compressor with an impeller, a shaft and a turbine according to any one of the previous aspects. The impeller is rotatably coupled to the turbine wheel by the shaft.

The present disclosure further relates to a method for mounting an actuator assembly into a turbine housing. The method comprises:
- providing a turbine housing with a bore extending from outside of the turbine housing into the turbine housing,
- pressing a bushing into the bore,
- providing an actuator shaft with a shaft step and a reduced diameter portion,
- inserting the actuator shaft into the bushing,
- inserting a seal ring into a space formed between the bushing and the reduced diameter portion,
- inserting an insert sleeve with a sleeve step into the space,
- disposing the insert sleeve onto the shaft step, and
- fixing, in particular welding, an outer lever to the actuator shaft.

In another aspect of the method, the bore may be provided from outside the turbine housing into a bypass channel of the turbine housing. Alternatively or additionally, the bushing may be pressed into the bore from outside of the turbine housing. Alternatively or additionally, the actuator shaft may be inserted the with the reduced diameter portion in front from the bypass channel into the bushing. Alternatively or additionally, the seal ring may be inserted into the space from outside the turbine housing. Alternatively or additionally, the insert sleeve may be inserted into the space from outside the turbine housing. Alternatively or additionally, the insert sleeve may be press-fit axially between the shaft step and the outer lever.

In another aspect of the method which is combinable with the previous aspect, the method steps are performed in the order in which they are listed.

### Description of the Drawings

- **FIG. 1**: shows a sectional side view of the actuator assembly;
- **FIG. 2A**: shows a detailed view of the sealing arrangement of the actuator assembly of FIG. 1;
- **FIG. 2B**: shows a detailed view of the sealing arrangement of FIG. 2A with diameter relations;
- **FIG. 3**: shows a turbine with the actuator assembly of FIG. 1 including the sealing arrangement;
- **FIG. 4**: shows a charging apparatus with the turbine of FIG. 3 including the actuator assembly.

### Detailed Description

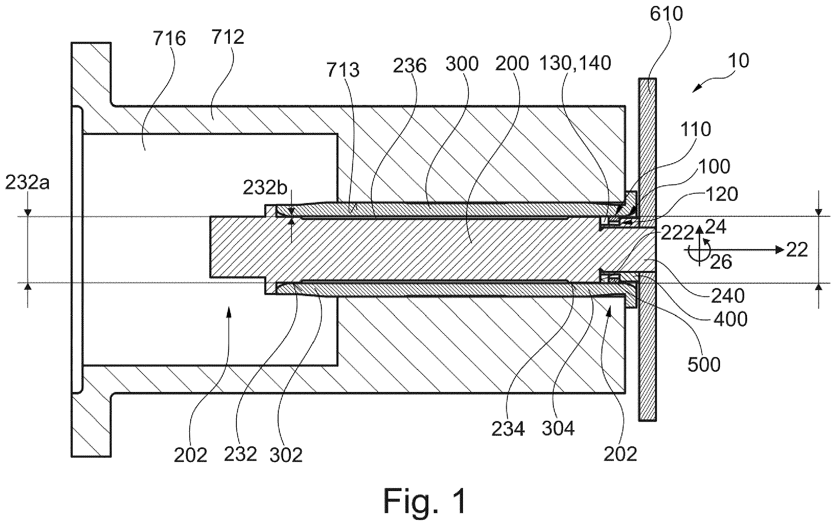

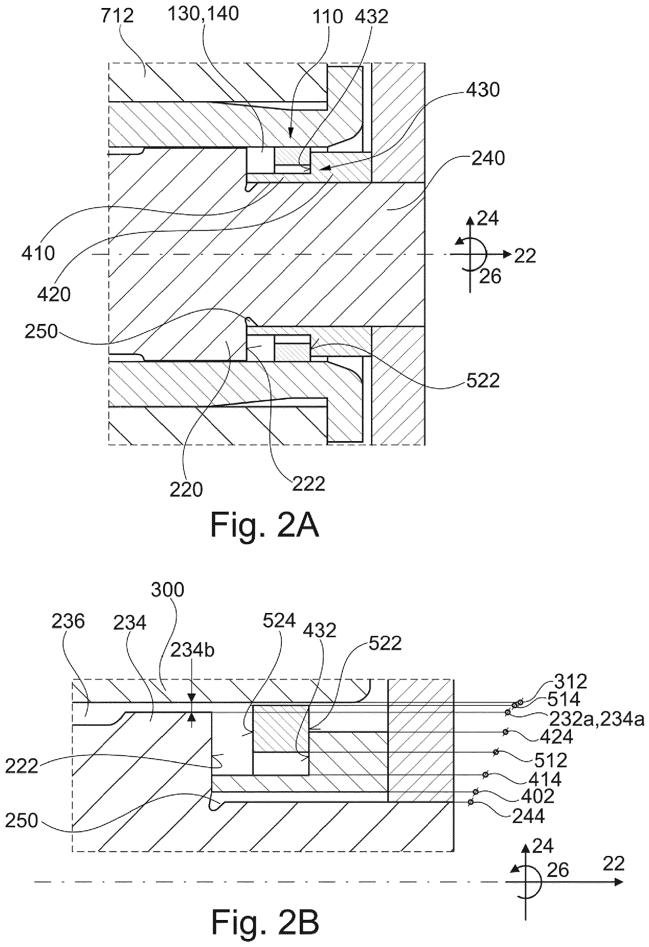

In the context of this invention, the expressions axially, axial or axial direction is a direction parallel of or along a rotation axis of the actuator shaft or the bushing or the seal ring or the insert sleeve. Thus, with reference to the figures, see, especially **FIGS. 1****,** **2A and 2B****,** an axial dimension is described with reference sign 22, a radial dimension extending "radially" away from the axial dimension 22 is described with reference sign 24. Furthermore, a circumferential dimension around the axial dimension 22 is described with reference sign 26. In the context of this invention the expression "outside" or "outer" should be referred to a location relative to a turbine housing into which the actuator assembly may be mounted. That means, "outside" means outside the turbine housing, and "outer" means relative closer to the outside than another portion which is closer to the inside of the turbine housing. With respect to the actuator assembly alone, "outer" can be interpreted as a driving side of the actuator assembly and "inner" as driven side of the actuator assembly.

**FIG. 1** illustrates an exemplary embodiment of the actuator assembly 10 for a charging apparatus 700 according to the present invention. The inventive actuator assembly 10 comprises an actuator shaft 200, a bushing 300 and a sealing arrangement 100. For illustrative purposes the actuator assembly 10 is depicted in **FIG. 1** being arranged in a housing, in particular a turbine housing 712 which, however, will be explained further below. The sealing arrangement 100 comprises an insert sleeve 400 and a seal ring 500. A radial sealing region 110 and an axial sealing region 120 are defined by the sealing arrangement 100. The radial sealing region 110 is formed between the bushing 300 and the seal ring 500. The axial sealing region 120 is formed between the seal ring 500 and the insert sleeve 400. This can also be seen in greater detail in **FIG. 2A** which shows the actuator assembly of **FIG. 1** in greater detail. The seal ring 500 is thereby configured and arranged to be driven into contact with the insert sleeve 400 by exhaust gas pressure. More specifically, the seal ring 500 is configured and arranged to be axially driven into contact with the insert sleeve 400 by exhaust gas pressure. These features advantageously lead to a self-actuated sealing which is enabled by exhaust gas pushing the seal ring 500 in an axial direction 22 against the insert sleeve 400. On the other hand, there is no or at least a reduced friction wear radially outward (and also radially inward) of the seal ring 500 as the seal ring 500 is slidable or drivable on the bushing 300 in order to come into contact with the insert sleeve 400. That means also that there is no preload acting on the actuator shaft 200 or the bushing 300. Consequently, there is not only less friction wear on the seal ring 500 but also on the actuator shaft 200 and the bushing 300. As the seal ring 500 can slide in an axial direction 22 inside a bore of the bushing 300 (the bore being radially inside the bushing 300), the actuator shaft 200 (and an outer lever 610 connected thereto which will be explained further below in more detail) are not restricted in axial and/or rotational movement by the seal ring 500. Thereby thermally or mechanically conditioned displacements or geometry changes of the actuator assembly 10 or parts of it, in particular the actuator shaft 200 may be possible or compensable without resulting in damages. Furthermore, by having the self-actuated sealing arrangement 10, there is no need for piston - or o-rings which are clamped at a fixed spot and have a gap in a circumferential direction 26 and, thus mostly result in a leakage at the gap and friction wear due to the clamping. The inventive seal ring 500, however, leads to close to zero leakage and reduced wear. The expressions radial sealing region 110 and axial sealing region 120 are to be understood as sealing regions which seal in a radial direction 24 (radial sealing region 110) and in an axial direction 22 (axial sealing region 120).

With further reference to **FIG. 1** the actuator shaft 200 comprises an axial inner end region 202 and an axial outer end region 204 which can also be referred to first axial end region 202 and second axial end region 204. Similarly, the bushing 300 comprises a first axial end region 302 (axial inner end region 302) and a second axial end region 304 (axial outer end region 304). The actuator shaft 200 is thereby arranged inside the bushing 300. The actuator shaft 200 is arranged inside the bushing 300 such that the first axial end region 202 of the actuator shaft 200 is adjacent the first axial end region 302 of the bushing 300 and that the second axial end region 204 of the actuator shaft 200 is adjacent the second axial end region 304 of the bushing 300. The sealing arrangement 100 is thereby located radially between the second axial end regions 204, 304.

The actuator shaft 200 comprises a reduced diameter portion 240 such that a shaft step 220 with a shaft step face 222 is formed (see, **FIGS. 1** **and** **2A**). The shaft step face 222 is directed in a substantial axial direction 22. The reduced diameter portion 240 is arranged at the axial outer end region 204. The sealing arrangement 100 is located radially outwardly of the reduced diameter portion 240. That means the sealing arrangement 100 is located radially between the bushing 300 and the reduced diameter portion 240. In other words, the sealing arrangement 100 is located between the bushing 300, the shaft step face 222 and the reduced diameter portion 240. This means also that the seal ring 500 and the insert sleeve 400 are accommodated between the bushing 300, the shaft step 220, in particular the shaft step face 222 and the reduced diameter portion 240.

The insert sleeve 400 comprises a first sleeve portion 410 with a first outer diameter 414 and a second sleeve portion 420 with a second outer diameter 424. The first sleeve portion 410 and the second sleeve portion 420 are arranged axially adjacent. Therefore, the first sleeve portion 410 may also be referred to first axial sleeve portion 410 and the second sleeve portion 420 may also be referred to second axial sleeve portion 420. This can be seen, in particular, in **FIGS. 2A and 2B****,** whereby **FIG. 2B** depicts an even more detailed view of the sealing arrangement 100 of the actuator assembly 10 as shown in **FIG. 2A****.** In detail, **FIG. 2B** schematically shows the geometrical relations, in particular the diameter relations of the different parts of the actuator assembly 10. For illustrative purposes the respective diameters and dimensions are schematically depicted in an exaggerated way to better distinguish between the different parts. For instance, between the seal ring 500 and the bushing 300 a gap is clearly visible. Although shown quite broad, this gap might be smaller such that a slide fit between the seal ring 500 and the bushing 300 but also a good sealing function is ensured. The second outer diameter 424 of the insert sleeve 400 (also referred to as outer diameter 424 of the second sleeve portion 420) is larger than the first outer diameter 414 of the insert sleeve 400 (also referred to as outer diameter 414 of the first sleeve portion 410) such that a sleeve step 430 is formed between the first sleeve portion 410 and the second sleeve portion 420. The sleeve step 430 has a sleeve step face 432 which is directed in a substantial axial direction 22. Thereby, the sleeve step face 432 and the shaft step face 222 are directed in opposing axial directions 22. The insert sleeve 400 is arranged at the reduced diameter portion 240 such that the sleeve step face 432 opposes the shaft step face 222. That means that the sleeve step face 432 and the shaft step face 222 face each other.

The first sleeve portion 410 is arranged axially between the shaft step 220 and the second sleeve portion 420 (see, in particular **FIGS. 2A and 2B**). The seal ring 500 is thereby arranged radially between the first axial sleeve portion 410 and the bushing 300 and axially between the second axial sleeve portion 420 (more specifically the sleeve step 430) and the shaft step 220. In other words, the seal ring 500 is arranged in a cavity 140. The cavity 140 is formed radially between the bushing 300 and the first sleeve portion 410 and axially between the second axial sleeve portion 420 (more specifically the sleeve step 430) and shaft step 220. More specifically, the cavity 140 is formed axially between the shaft step face 222 and the sleeve step face 432 and radially between and a radially outer surface of the first sleeve portion 410 and a radially inner surface of the bushing 300.

The sealing arrangement 100 further comprises an exhaust gas pressure chamber 130 (see, in particular **FIGS. 1** **and** **2A**). The exhaust gas pressure chamber 130 is formed radially between the first axial sleeve portion 410 and the bushing 300 axially between the second axial sleeve portion 420 and the shaft step 220. That means both the exhaust gas pressure chamber 130 and the seal ring 500 are located inside the cavity 140. In other words, the exhaust gas pressure chamber 130 represents a portion of the cavity 140 minus the space occupied by the seal ring 500. That means the exhaust gas pressure chamber 130 is actually formed radially between the bushing 300 and the first sleeve portion 410 and axially between the shaft step 220 and the seal ring 500. Furthermore, the exhaust gas pressure chamber 130 comprises a small annular portion which is formed radially between the seal ring 500 and the first sleeve portion 410. However, this small annular portion does is functionally negligible for the function of the exhaust gas pressure chamber 130 as the pressure forces which enact on the seal ring 500 from the small annular portion are equalized by themselves due to the geometry of the small annular portion. The exhaust gas pressure chamber 130 is configured to build up exhaust gas pressure to move the seal ring 500 into axial sealing contact with the insert sleeve 400 in order to establish the axial sealing region 120. By providing the exhaust gas pressure chamber 130, exhaust gas can accumulate inside the exhaust gas chamber 130 in order to provide pressure force which enacts on the seal ring 500 to urge it against the insert sleeve 400. More specifically, the seal ring 500 is urged in an axial direction 22 towards the sleeve step face 432. The exhaust gas pressure chamber 130 can further ensure that exhaust gas is distributed along the whole circumference of the first sleeve portion 410. Thereby the exhaust gas pressure can equally enact on the sleeve ring 500 in an axial direction 26. This can for instance prevent tilting and leads to a more homogenous and smooth movement of the seal ring 500.

With further reference to **FIG. 1****,** the shaft 200 comprises a first shaft bearing land 232 and a second shaft bearing land 234. The second shaft bearing land 234 is axially spaced apart from the first shaft bearing land 232 such that an exhaust gas passage 236 is formed therebetween. The first shaft bearing land 232 is arranged close to the first axial end region 202 of the actuator shaft 200 such that it is adjacent to the first axial end region 302 of the bushing 300. The second shaft bearing land 234 is arranged in the second axial end region 204 of the actuator shaft 200 such that it is adjacent to the second axial end region 304 of the bushing 300. The second shaft bearing land 234 is arranged directly adjacent the shaft step 220 or more precisely on the shaft step 220. That means the second shaft bearing land 234 may form an outer diameter 234a of the shaft step 220. By providing the shaft bearing lands 232, 234 friction wear between the actuator shaft 200 and the bushing 300 can be reduced. Furthermore, the stability of the actuator shaft 220 can be improved. By providing the exhaust gas passage 236 exhaust gas flow towards the exhaust gas pressure chamber 130 along the actuator shaft 200 can be facilitated.

To provide the exhaust gas flow towards the exhaust gas pressure chamber 130, an outer diameter 232a of the first shaft bearing land 232 and the outer diameter 234a of the second shaft bearing land 234 are smaller than an inner diameter 312 of the bushing 300 (see, in particular **FIG. 2B**). The outer diameters 232a, 234a are adapted such that exhaust gas can flow axially through a gap 232b formed radially between the first shaft bearing land 232 and the bushing 300 and through a gap 234b formed radially the second shaft bearing land 234 and the bushing 300 (gap 232b only indicated in **FIG. 1** whilst gap 234b is clearly visible in **FIG. 2B**). The outer diameter 232a of the first shaft bearing land 232 and the outer diameter 234a of the second shaft bearing land 234 are smaller than an outer diameter 514 of the seal ring 500. In other words, the outer diameter 514 of the seal ring 500 is larger than the outer diameter 232a, 232b of the first and second shaft bearing land 232, 234 and smaller than the inner diameter 312 of the bushing 300.

As the outer diameter 514 of the seal ring 500 is smaller than the inner diameter 312 of the bushing 300, the seal ring 500 can slide with respect to the bushing 300 (see, **FIGS. 2A and 2B**). In other words, the radial sealing region 110 is configured as slide fit. That means, the seal ring 500 can slide closely inside the bushing 300 but at the same time prevents or at least reduces leakage. In particular, the seal ring 500 can slide on a radially inner surface of the bushing 300. Thereby, less force is exerted on the seal ring 500 but also on the bushing 300. This leads to a negligible friction wear or at least less friction wear in comparison to, for instance, a piston ring. The slide fit further ensures an axial movability of the seal ring 500 to compensate for an axial displacement of the actuator shaft 200 and/or the insert sleeve 400 (and/or an outer lever 610 which may be connected to the actuator shaft 200). Furthermore, the axial movability ensures that the seal ring 500 can be pushed against and in close contact with the insert sleeve 400. Consequently, the radial sealing region 110 is formed between an outer diameter 514 of the seal ring 500 and an inner diameter 312 of the bushing 300. In other words, the radial sealing region 110 may be formed between the radially inner surface of the bushing 300 and a radially outer surface of the seal ring 500. On the radially opposite side of the seal ring 500 an inner diameter 512 of the seal ring 500 is larger than the outer diameter 414 of the first sleeve portion 410 such that a clearance fit is provided radially between the seal ring 500 and the first sleeve portion 410. This ensures free movability of the seal ring 500 and prevents friction wear between the first sleeve portion 410 and the seal ring 500.

**FIG. 2B** shows that the seal ring 500 comprises a first axial end face 522 and a second axial end face 524. The first and second axial end faces 522, 524 are oriented in opposing axial directions 22. The first axial end face 522 is directed towards the sleeve step face 432 and the second axial end face 524 is directed towards the shaft step face 222. The inner diameter 512 of the seal ring 500 is smaller than the outer diameter 424 of the second sleeve portion 420. By this the seal ring 500 and the insert sleeve 400 are overlapping in a radial direction 24. Thereby the axial sealing region 120 can be established. That means, the axial sealing region 120 is formed between the first axial end face 522 and the sleeve step face 432. Furthermore, the seal ring 500 can be axially secured or restricted by the insert sleeve 400 when exhaust gas pressure urges the seal ring 500 in an axial direction 22 towards the second sleeve portion 420. Both axial end faces 522, 524 are formed as an annular faces. They do not comprise interruptions and thus form a full 360° ring shape. Similarly, the sleeve step face 432 is formed as an annular face, does comprise interruptions and thus form a full 360° ring shape. These features ensure, that there is a full 360° sealing contact possible. Although in **FIGS. 1****,** **2A****,** **2B** **and** **3** the first axial end face 522 and the sleeve step face 432 are depicted substantially flat, in alternative configurations on or both of them could be formed conical or curved to establish a line contact in the axial sealing region 120. This feature leads advantageously to the effect, that the sealing arrangement 100 can compensate for tilting of the actuator assembly 10, in particular tilting of the actuator shaft 200. Furthermore, friction wear between the seal ring 500 and the insert sleeve 400 could be reduced to the reduced contact area.

As already mentioned, the seal ring 500 is configured as a closed ring (axial end faces 522, 524 form a full 360° ring shape). In other words, the seal ring 500 is shaped to have no interruptions in a circumferential direction 26. Furthermore, the seal ring 500 is configured as a solid ring, in particular a substantially rigid ring. In particular, the seal ring 500 is made from metallic material. In alternative embodiments, the seal ring 500 can also be made from any other suitable material, for instance, a heat-resistant thermosetting material.

As illustrated in **FIGS. 1****,** **2A and 2B****,** the actuator assembly 10 further comprises an outer lever 610. The outer lever 610 is attached to the axial outer end region 204 of the shaft 200.

More specifically, the outer lever 610 is attached to the reduced diameter portion 240. The outer lever 610 is thereby axially adjacent to the insert sleeve 400 such that the insert sleeve 400 is axially press-fit between the shaft step 220 and the outer lever 610. An inner diameter 402 of the insert sleeve 400 is larger than an outer diameter 244 of the reduced diameter portion 240 such that a radial clearance fit is established between the shaft 200 and the insert sleeve 400. The shaft 200 comprises an undercut 250 which extends circumferentially between the reduced diameter portion 240 and the shaft step 220. This latter feature ensures an axial abutment of the insert sleeve 400 and the shaft step face 222.

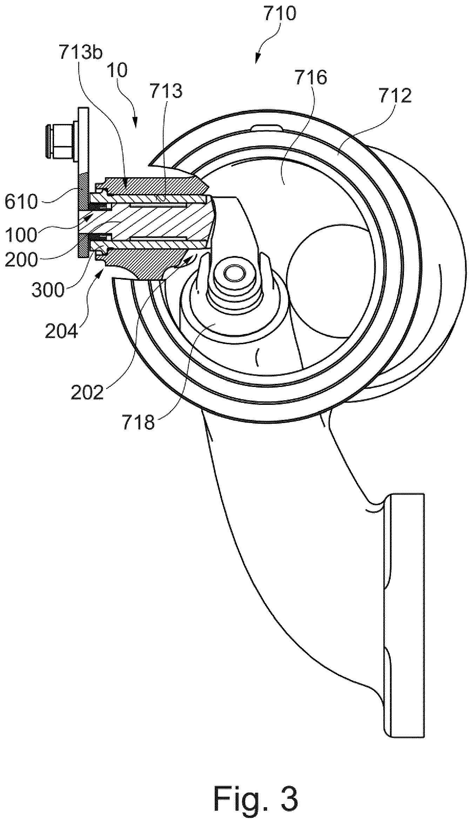

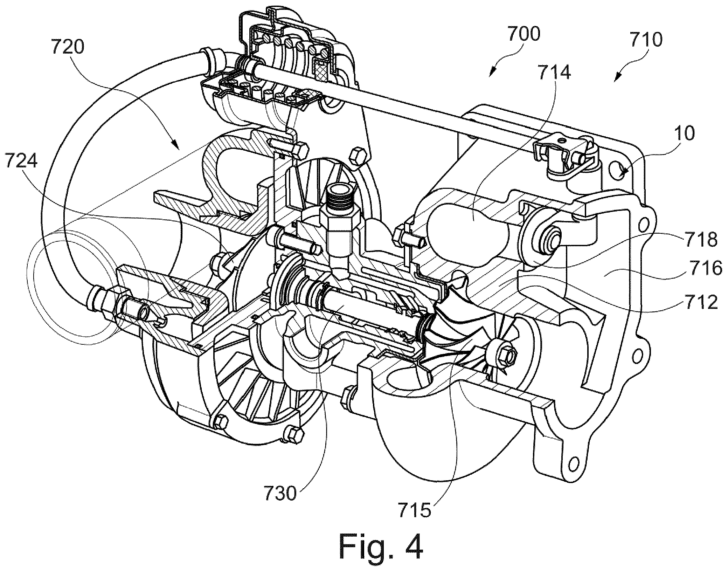

**FIG. 3** shows a turbine 710 for a charging apparatus 700 which is depicted in **FIG. 4****.** The turbine 710 comprises a turbine housing 712, a turbine wheel 715 (only visible in **FIG. 4**) rotatably arranged in the turbine housing 712 and a bypass valve 718. The turbine housing 712 defines a volute 714 and a bypass channel 716 which is fluidically coupled to the volute 714 via a bypass opening 717. The bypass valve 718 is configured to open and close the bypass opening 717. The turbine 710 further comprises the actuator assembly 10. Thereby, the actuator assembly 10 is coupled to the bypass valve 718. More specifically, the bypass valve 718 is coupled to the first axial end region 202 of the actuator shaft 200.

The actuator assembly 10 extends through a bore 713 of the turbine housing 712 from outside the turbine housing 712 into the bypass channel 716 (see, **FIGS. 2** **and** **3**). In other words, the actuator assembly 10 is arranged inside the bore 713 of the turbine housing 712. The sealing arrangement 100 is located at an outer end region 713b of the bore 713 which is opposite to the bypass channel 716. The actuator shaft 200 extends into the bypass channel 716 and is configured such that exhaust gas from the bypass channel 716 can stream at the axial inner end region 202 of the actuator shaft 200 along the shaft 200 to the exhaust gas pressure chamber 130 of the sealing arrangement 100. More specifically, exhaust gas can stream from the bypass channel 716 along the gaps 232b, 234b and the exhaust gas passage 236 into the exhaust gas pressure chamber 130. The bushing 300 extends into the bypass channel 716 and is configured such that exhaust gas from the bypass channel 716 can stream from the axial inner end region 202 of the actuator shaft 200 along the shaft 200 to the exhaust gas pressure chamber 130 of the sealing arrangement 100.

**FIG. 4** illustrates that the charging apparatus 700 comprises a compressor 720 with an impeller 724, a shaft 730 and the turbine 710. The impeller 724 is rotatably coupled to the turbine wheel 714 by the shaft 730. In alternative embodiments the charging apparatus 700 may further comprise an electric motor (not depicted). The electric motor can also be coupled to the impeller 724 via the shaft 730.

The present disclosure further relates to a method for mounting the actuator assembly 10 into the turbine housing 712. The method comprises several steps which are performed in the following order. First, a turbine housing 712 is provided with a bypass channel 716 and a bore 713 which extends from outside of the turbine housing 712 into the bypass channel 716. Next, a bushing 300 is pressed into the bore 713 from outside of the turbine housing 712. Then an actuator shaft 200 with a shaft step 220 and a reduced diameter portion 240 is provided. The actuator shaft 200 is inserted the with the reduced diameter portion 240 in front from the bypass channel 716 into the bushing 300. Subsequently, a seal ring 500 is inserted into a space formed between the bushing 300 and the reduced diameter portion 240 from outside the turbine housing 712. After inserting the seal ring 500, an insert sleeve 400 with a sleeve step 430 is also into the space from outside the turbine housing 712. The insert sleeve 400 is disposed onto the shaft step 220 and press-fit axially between the shaft step 220 and an outer lever 610 which is welded to the actuator shaft 200.

## Claims

1. An actuator assembly (10) for a turbine (710) of a turbocharger comprising:
a bushing (300),
an actuator shaft (200) with a shaft step (220) and a reduced diameter portion (240), wherein the actuator shaft (200) is arranged inside the bushing (300), and
**characterized by**
a sealing arrangement (100) comprising an insert sleeve (400) and a seal ring (500),
the insert sleeve (400) having a sleeve step (430) between a larger diameter sleeve portion (420) and a smaller diameter sleeve portion (410), the insert sleeve (400) being arranged on the reduced diameter portion (240),
wherein the seal ring (500) is arranged in a cavity (140) formed radially between the bushing (300) and the smaller diameter sleeve portion (410) and axially between the sleeve step (430) and the shaft step (220),
wherein the sealing arrangement (100) defines a radial sealing region (110) which is formed between the bushing (300) and the seal ring (500), and an axial sealing region (120) which is formed between the seal ring (500) and the insert sleeve (400), and wherein the seal ring (500) is configured and arranged to be driven into contact with the insert sleeve (400) by exhaust gas pressure.

2. The actuator assembly (10) of claim 1, wherein the sealing arrangement (100) further comprises an exhaust gas pressure chamber (130), wherein the exhaust gas pressure chamber (130) is configured to build up exhaust gas pressure to move the seal ring (500) into axial sealing contact with the insert sleeve (400) in order to establish the axial sealing region (120).

3. The actuator assembly (10) of any one of the previous claims, wherein the radial sealing region (110) is configured as slide fit.

4. The actuator assembly (10) of any one of the previous claims, wherein the radial sealing region (110) is formed between an outer diameter (514) of the seal ring (500) and an inner diameter (312) of the bushing (300).

5. The actuator assembly (10) of any one of the previous claims, wherein the axial sealing region (120) is formed between a first axial end face (522) of the seal ring (500) and a sleeve step face (432) of the insert sleeve (400).

6. The actuator assembly (10) of any one of the previous claims, wherein the sleeve step (430) has a sleeve step face (432) is formed between the smaller diameter sleeve portion (410) and the larger diameter sleeve portion (420).

7. The actuator assembly (10) of any one of the previous claims, wherein the reduced diameter portion (240) is arranged at an axial outer end region (204) of the actuator shaft (200), and wherein the shaft step (220) has a shaft step face (222), wherein the sealing arrangement (100) is located radially outwardly of the reduced diameter portion (240).

8. The actuator assembly (10) of claim 7, when dependent of claim 6, wherein the insert sleeve (400) is arranged on the reduced diameter portion (240) such that the sleeve step face (432) opposes the shaft step face (222).

9. The actuator assembly (10) of any one of the previous claims, further comprising an outer lever (610) which is attached to an axial outer end region (204) of the actuator shaft (200) such that the insert sleeve (400) is axially press-fit between a actuator shaft step (220) of the actuator shaft (200) and the outer lever (610).

10. The actuator assembly (10) of any one of the previous claims, wherein the seal ring (500) is configured as a closed ring and/or as a solid ring, wherein the seal ring is made from metallic material.

11. A turbine (710) for a turbocharger, the turbine (710) comprising:
a turbine housing (712) defining a volute (714) and a bypass channel (716) being fluidically coupled to the volute (714) via a bypass opening (717),
a turbine wheel (715) rotatably arranged in the turbine housing (712), and
a bypass valve (718) configured to open and close the bypass opening (717),
**characterized by**
an actuator assembly (10) of any one of the previous claims being coupled to the bypass valve (718).

12. The turbine (710) of claim 11, wherein the actuator assembly (10) extends through a bore (713) in the turbine housing (712) from outside the turbine housing (712) into the bypass channel (716) and, wherein the sealing arrangement (100) is located at an outer end region (713b) of the bore (713) which is opposite to the bypass channel (716).

13. A charging apparatus (700) comprising:
a compressor (720) with an impeller (724), and
a shaft (730),
**characterized by** a turbine (710) of any one of claims 11 or 12, wherein the impeller (724) is rotatably coupled to the turbine wheel (714) by the shaft (730).

## Patentansprüche

1. Stellgliedanordnung (10) für eine Turbine (710) eines Turboladers, Folgendes umfassend:
eine Buchse (300),
eine Stellgliedwelle (200) mit einer Wellenstufe (220) und einem Abschnitt mit verringertem Durchmesser (240), wobei die Stellgliedwelle (200) innerhalb der Buchse (300) angeordnet ist, und
**gekennzeichnet durch**
eine Dichtungsanordnung (100), umfassend eine Einsatzhülse (400) und einen Dichtungsring (500), wobei die Einsatzhülse (400) eine Hülsenstufe (430) zwischen einem Hülsenabschnitt mit größerem Durchmesser (420) und einem Hülsenabschnitt mit kleinerem Durchmesser (410) aufweist, wobei die Einsatzhülse (400) auf dem Abschnitt mit verringertem Durchmesser (240) angeordnet ist,
wobei der Dichtungsring (500) in einem Hohlraum (140) angeordnet ist, der radial zwischen der Buchse (300) und dem Hülsenabschnitt mit kleinerem Durchmesser (410) und axial zwischen der Hülsenstufe (430) und derWellenstufe (220) ausgebildet ist,
wobei die Dichtungsanordnung (100) einen radialen Dichtungsbereich (110), der zwischen der Buchse (300) und dem Dichtungsring (500) ausgebildet ist, und einen axialen Dichtungsbereich (120), der zwischen dem Dichtungsring (500) und der Einsatzhülse (400) ausgebildet ist, definiert, und
wobei der Dichtungsring (500) dazu ausgelegt und angeordnet ist, durch Abgasdruck mit der Einsatzhülse (400) in Kontakt gedrückt zu werden.

2. Stellgliedanordnung (10) nach Anspruch 1, wobei die Dichtungsanordnung (100) ferner eine Abgasdruckkammer (130) umfasst, wobei die Abgasdruckkammer (130) dazu ausgelegt ist, Abgasdruck aufzubauen, um den Dichtungsring (500) in axialen Dichtungskontakt mit der Einsatzhülse (400) zu bewegen, um den axialen Dichtungsbereich (120) aufzubauen.

3. Stellgliedanordnung (10) nach irgendeinem der vorstehenden Ansprüche, wobei der radiale Dichtungsbereich (110) als Gleitsitz ausgelegt ist.

4. Stellgliedanordnung (10) nach irgendeinem der vorstehenden Ansprüche, wobei der radiale Dichtungsbereich (110) zwischen einem Außendurchmesser (514) des Dichtungsrings (500) und einem Innendurchmesser (312) der Buchse (300) ausgebildet ist.

5. Stellgliedanordnung (10) nach irgendeinem der vorstehenden Ansprüche, wobei der axiale Dichtungsbereich (120) zwischen einer ersten axialen Stirnfläche (522) des Dichtungsrings (500) und einer Hülsenstufenfläche (432) der Einsatzhülse (400) ausgebildet ist.

6. Stellgliedanordnung (10) nach irgendeinem der vorstehenden Ansprüche, wobei die Hülsenstufe (430) eine Hülsenstufenfläche (432) aufweist, die zwischen dem Hülsenabschnitt mit kleinerem Durchmesser (410) und dem Hülsenabschnitt mit größerem Durchmesser (420) ausgebildet ist.

7. Stellgliedanordnung (10) nach irgendeinem der vorstehenden Ansprüche, wobei der Abschnitt mit verringertem Durchmesser (240) an einem axial äußerer Endbereich (204) der Stellgliedwelle (200) angeordnet ist und wobei die Wellenstufe (220) eine Wellenstufenfläche (222) aufweist, wobei die Dichtungsanordnung (100) radial außerhalb des Abschnitts mit verringertem Durchmesser (240) angeordnet ist.

8. Stellgliedanordnung (10) nach Anspruch 7, wenn abhängig von Anspruch 6, wobei die Einsatzhülse (400) derart an dem Abschnitt mit verringertem Durchmesser (240) angeordnet ist, dass die Hülsenstufenfläche (432) der Wellenstufenfläche (222) entgegengesetzt ist.

9. Stellgliedanordnung (10) nach irgendeinem der vorstehenden Ansprüche, ferner umfassend einen äußeren Hebel (610), der derart an einem axial äußeren Endbereich (204) der Stellgliedwelle (200) befestigt ist, dass die Einsatzhülse (400) zwischen einer Stellgliedwellenstufe (220) der Stellgliedwelle (200) und dem äußeren Hebel (610) axial eingepresst ist.

10. Stellgliedanordnung (10) nach irgendeinem der vorstehenden Ansprüche, wobei der Dichtungsring (500) als geschlossener Ring und/oder als massiver Ring ausgelegt ist, wobei der Dichtungsring aus einem metallischen Material gefertigt ist.

11. Turbine (710) für einen Turbolader, wobei die Turbine (710) Folgendes umfasst:
ein Turbinengehäuse (712), das eine Spirale (714) und einen Bypasskanal (716), der über eine Bypassöffnung (717) fluidisch mit der Spirale (714) gekoppelt ist, definiert,
ein Turbinenrad (715), das drehbar im Turbinengehäuse (712) angeordnet ist, und ein Bypassventil (718), das dazu ausgelegt ist, die Bypassöffnung (717) zu öffnen und zu schließen, **gekennzeichnet durch**
eine Stellgliedanordnung (10) nach irgendeinem der vorstehenden Ansprüche, die mit dem Bypassventil (718) gekoppelt ist.

12. Turbine (710) nach Anspruch 11, wobei sich die Stellgliedanordnung (10) durch eine Bohrung (713) im Turbinengehäuse (712) von außerhalb des Turbinengehäuses (712) in den Bypasskanal (716) erstreckt und wobei sich die Dichtungsanordnung (100) an einem dem Bypasskanal (716) entgegengesetzten äußeren Endbereich (713b) der Bohrung (713) befindet.

13. Aufladevorrichtung (700), Folgendes umfassend:
einen Verdichter (720) mit einem Laufrad (724) und
eine Welle (730),
**gekennzeichnet durch** eine Turbine (710) nach irgendeinem der Ansprüche 11 oder 12, wobei das Laufrad (724) über die Welle (730) mit dem Turbinenrad (714) drehbar gekoppelt ist.

## Revendications

1. Ensemble actionneur (10) destiné à une turbine (710) d'un turbocompresseur comprenant :
une douille (300),
un arbre actionneur (200) possédant un épaulement d'arbre (220) et une partie de diamètre réduit (240), l'arbre actionneur (200) étant disposé à l'intérieur de la douille (300), et
**caractérisé par**
un agencement d'étanchéité (100) comprenant un manchon d'insert (400) et une bague d'étanchéité (500), le manchon d'insert (400) présentant un épaulement de manchon (430) entre une partie de manchon de plus grand diamètre (420) et une partie de manchon de plus petit diamètre (410), le manchon d'insert (400) étant disposé sur la partie de diamètre réduit (240),
la bague d'étanchéité (500) étant disposée dans une cavité (140) formée radialement entre la douille (300) et la partie de manchon de plus petit diamètre (410) et axialement entre l'épaulement de manchon (430) et l'épaulement d'arbre (220),
l'agencement d'étanchéité (100) définissant une région d'étanchéité radiale (110) qui est formée entre la douille (300) et la bague d'étanchéité (500), et une région d'étanchéité axiale (120) formée entre la bague d'étanchéité (500) et le manchon d'insert (400), et
la bague d'étanchéité (500) étant conçue et destinée à être mise en contact avec le manchon d'insert (400) par la pression des gaz d'échappement.

2. Ensemble actionneur (10) selon la revendication 1, l'agencement d'étanchéité (100) comprenant en outre une chambre de pression des gaz d'échappement (130), la chambre de pression des gaz d'échappement (130) étant conçue pour augmenter la pression des gaz d'échappement afin de déplacer la bague d'étanchéité (500) en contact d'étanchéité axial avec le manchon d'insert (400) afin d'établir la région d'étanchéité axiale (120).

3. Ensemble actionneur (10) selon l'une quelconque des revendications précédentes, la région d'étanchéité radiale (110) étant conçue comme un ajustement par glissement.

4. Ensemble actionneur (10) selon l'une quelconque des revendications précédentes, la région d'étanchéité radiale (110) étant formée entre un diamètre extérieur (514) de la bague d'étanchéité (500) et un diamètre intérieur (312) de la douille (300).

5. Ensemble actionneur (10) selon l'une quelconque des revendications précédentes, la région d'étanchéité axiale (120) étant formée entre une première face d'extrémité axiale (522) de la bague d'étanchéité (500) et une face d'épaulement de manchon (432) du manchon d'insert (400).

6. Ensemble actionneur (10) selon l'une quelconque des revendications précédentes, l'épaulement de manchon (430) ayant une face d'épaulement de manchon (432) étant formée entre la partie de manchon de plus petit diamètre (410) et la partie de manchon de plus grand diamètre (420).

7. Ensemble actionneur (10) selon l'une quelconque des revendications précédentes, la partie de diamètre réduit (240) étant disposée dans une région d'extrémité extérieure axiale (204) de l'arbre actionneur (200), et l'épaulement d'arbre (220) ayant une face d'épaulement d'arbre (222), l'agencement d'étanchéité (100) étant situé radialement à l'extérieur de la partie de diamètre réduit (240).

8. Ensemble actionneur (10) selon la revendication 7, lorsqu'elle dépend de la revendication 6, le manchon d'insert (400) étant disposé sur la partie de diamètre réduit (240) de sorte que la face d'épaulement de manchon (432) s'oppose à la face d'épaulement d'arbre (222).

9. Ensemble actionneur (10) selon l'une quelconque des revendications précédentes comprenant en outre un levier extérieur (610) qui est fixé à une région d'extrémité extérieure axiale (204) de l'arbre actionneur (200) de sorte que le manchon d'insert (400) soit emboîté axialement par pression entre un épaulement d'arbre actionneur (220) de l'arbre actionneur (200) et le levier extérieur (610).

10. Ensemble actionneur (10) selon l'une quelconque des revendications précédentes, la bague d'étanchéité (500) étant conçue comme une bague fermée et/ou comme une bague pleine, la bague d'étanchéité étant en un matériau métallique.

11. Turbine (710) pour turbocompresseur, la turbine (710) comprenant :
un boîtier de turbine (712) définissant une volute (714) et un canal de dérivation (716) accouplé fluidiquement à la volute (714) par l'intermédiaire d'une ouverture de dérivation (717),
une roue de turbine (715) disposée en rotation dans le boîtier de turbine (712), et une soupape de dérivation (718) conçue pour ouvrir et fermer l'ouverture de dérivation (717),
**caractérisée par**
un ensemble actionneur (10) selon l'une quelconque des revendications précédentes accouplé à la soupape de dérivation (718).

12. Turbine (710) selon la revendication 11, l'ensemble actionneur (10) s'étendant à travers un alésage (713) dans le boîtier de turbine (712) depuis l'extérieur du boîtier de turbine (712) dans le canal de dérivation (716) et, l'agencement d'étanchéité (100) étant situé au niveau d'une région d'extrémité extérieure (713b) de l'alésage (713) qui est opposée au canal de dérivation (716).

13. Appareil de charge (700) comprenant :
un compresseur (720) doté d'une roue (724), et
un arbre (730),
**caractérisé par** une turbine (710) selon l'une quelconque des revendications 11 ou 12, la roue (724) étant accouplée en rotation à la roue de turbine (714) par l'arbre (730).
